# EUROPEAN PATENT APPLICATION

(11) **EP 4 840 977 A1**
(43) Date of publication of application: **18.11.2026**
(21) Application number: 25760906.5
(22) Date of filing: 25.02.2025
(51) Int. Cl.: C22C 21/08, C22F 1/047, F17C 1/14, F17C 1/16

(54) **ALUMINUM ALLOY SHEET FOR HIGH-STRENGTH, HIGH-TOUGHNESS, AND HIGH-PRESSURE HYDROGEN STORAGE CYLINDER LINER, PREPARATION METHOD, AND GAS CYLINDER LINER**

(30) Priority: 27.02.2024 CN 202410214510
(71) Applicant: BAOSHAN IRON & STEEL CO., LTD., Shanghai 201900 (CN)
(72) Inventor: WU, Chang, Shanghai 201900 (CN); LIU, Juntao, Shanghai 201900 (CN); YANG, Bing, Shanghai 201900 (CN); ZENG, Yu, Shanghai 201900 (CN); CHEN, Jiqiang, Shanghai 201900 (CN)
(74) Representative: Maiwald GmbH
(86) International application number: PCT/CN2025/079063
(87) International publication number: WO 2025/180366

(57) **Abstract**

Provided is an aluminum alloy plate for high-pressure hydrogen storage cylinder liner with high strength and high toughness, a manufacturing method therefor, and a gas cylinder liner, wherein the chemical composition in percentage by weight is: Mg: 0.93-1.14%, Si: 0.56-0.70%, Fe: 0.45-0.51%, Cu: 0.29-0.33%, Mn: 0.01-0.03%, Cr: 0.17-0.23%, Zn: 0.01-0.07%, Ti: 0.028-0.033%, Pb: 0.001-0.003%, Bi: 0.0002-0.0006%, with the balance comprising Al and inevitable impurities, a total amount of the impurities is ≤0.15%, and the above elements also satisfy: Mg/Si = 1.6-1.68. Through alloy composition design and by adopting a rolling hot deformation method, the present invention improves the grain size and the distribution of strengthening phases such as Mg₂Si and Al₂Cu to enhance the formability of the aluminum alloy plate, obtaining a hydrogen storage cylinder liner with high strength, high toughness, and high fatigue life. Moreover, the manufacturing process takes less time and costs less, which is more conducive to industrial popularization and application.

## Description

### TECHNICAL FIELD

The present invention relates to the technical field of metal materials and processing technologies therefor, and in particular to an aluminum alloy plate for high-pressure hydrogen storage cylinder liner with high strength and high toughness, a manufacturing method therefor, and a gas cylinder liner.

### BACKGROUND

As a clean, efficient, and sustainable new energy source, hydrogen energy has become one of the mainstays of the low-carbon energy system, having huge market potential in the fields of energy, transportation, and industrial production. The process of hydrogen energy utilization mainly includes hydrogen production, storage and transportation, and application, among which the key to hydrogen energy application is safe and efficient hydrogen storage and transportation technology.

Currently, steel cylinders are mostly used to store hydrogen fuel, but hydrogen steel cylinders for vehicles have disadvantages such as heavy weight, small capacity-to-weight ratio, susceptibility to corrosion, unsafe failure modes, and low working pressure, which restrict the application of hydrogen energy in the field of new energy vehicles. Under the background of advocating energy conservation and emission reduction, new energy vehicles urgently need a hydrogen storage cylinder component that is lightweight, resistant to high pressure, and has high fatigue life to break through the application bottleneck.

Therefore, in order to reduce weight, hydrogen storage containers with metal liners having fiber-wound structure have emerged in the market. The material of the metal liner is usually an aluminum alloy. However, high-strength and high-toughness aluminum alloys such as the 2xxx and 7xxx grades have poor spin forming capability, thus an aluminum alloy material with strong formability and high strength and toughness is urgently needed for the metal liner of the hydrogen storage container.

Chinese patent CN 112743878 A discloses "High-Pressure Hydrogen Storage Cylinder with Fiber Composite and Manufacturing Method Therefor". By winding T700 carbon fiber on the outer surface of a 6061 aluminum liner, the strength and resistance of the hydrogen cylinder are enhanced, and the performance and safety of the hydrogen cylinder for high-pressure hydrogen storage are improved. According to tests under the GB/T 35544-2017 standard, its final bursting pressure can reach 170 MPa or more, and its fatigue loading life can reach 10,000 cycles or more, which is consistent with the technical performance of current mainstream Type III cylinders. A high-pressure hydrogen storage cylinder with light weight, high strength, fatigue resistance, high structural rigidity, and good high or low temperature impact stability is obtained. However, this patent does not mention the related technology of the aluminum material required for the aluminum liner.

Chinese patent CN 115382984 A discloses "A Stamping Method and Deep Drawing Die for an Aluminum Alloy Liner of a Large-Capacity Hydrogen Storage Cylinder". By hot stamping an aluminum ingot, then turning, and finally forming by cold deep drawing, an aluminum alloy liner of hydrogen storage cylinder can be produced without the need for power spinning and thickness reduction, effectively solving the technical problem of low production efficiency in processing aluminum alloy liners for large-capacity hydrogen storage cylinders by power spinning and thickness reduction. However, this patent does not mention the related technology of the aluminum alloy used for the aluminum liner.

Chinese patent CN 115466887 A discloses "A High-Strength and High-Toughness Aluminum Alloy Liner Material, Manufacturing Method and Application Therefor". By optimizing the aluminum alloy material composition and adopting process steps including semi-continuous casting, homogenization heat treatment, backward extrusion forming, annealing heat treatment, power spinning forming, necking spin forming, and solid solution and aging heat treatment, a high-strength and high-toughness aluminum alloy liner for high-pressure hydrogen cylinders is manufactured and its mechanical properties are significantly improved. However, compared with roll forming, backward extrusion forming has the following disadvantages:
(1) Backward extrusion forming requires the use of specialized equipment and dies for production, and compared with roll forming, its production cost is higher;
(2) During the backward extrusion forming, the precision of the finished product is limited by the die because the material needs to be extruded through a die orifice, whereas roll forming can improve the processing precision of the product through multiple rolling passes;
(3) Compared with roll forming, during the backward extrusion forming, the material is prone to defects such as indentations, scratches, and pores, and requires surface treatment to achieve good surface quality.

Chinese Patent CN 114457265 B discloses "A 6 Series Aluminum Alloy with High Strength and High Fatigue Performance, Gas Cylinder and Manufacturing Method Therefor". By optimizing the alloy composition, increasing the maximum solid solubility of Mg₂Si, and adding a homogenization heat treatment, the grains of the substrate after annealing are refined. The manufactured gas cylinder after spray quenching at 550-560°C and aging treatment at 160-165°C has a tensile strength as high as 340 MPa or more and a fatigue cycle number of 16,000 cycles or more. However, this method has the following disadvantages: (1) The method adds a homogenization treatment process, which increases costs for industrial production; (2) Since the method requires a cold rolling process, the resulting plate has relatively large limitations and can only be used to produce small-sized gas cylinders, which is not conducive to industrial popularization and application.

In summary, the manufacturing of reinforced hydrogen storage cylinder liners at present mainly relies on power spinning of aluminum tubes and backward extrusion. The only method for manufacturing aluminum alloy plates for hydrogen storage cylinders by rolling requires high-temperature long-time homogenization heat treatment and cold rolling treatment, resulting in a narrow applicable scope that is not conducive to industrial popularization.

### SUMMARY

An object of the present invention is to provide an aluminum alloy plate for high-pressure hydrogen storage cylinder liner with high strength and high toughness, a manufacturing method therefor, and a gas cylinder liner. By improving the grain size and the distribution of strengthening phases of the aluminum alloy plate such as Mg₂Si and Al₂Cu, the formability of the aluminum alloy plate is improved. The aluminum alloy plate has a yield strength of ≤ 54 MPa, a tensile strength of ≤ 120 MPa, and an elongation of ≥ 29%, thereby further obtaining a hydrogen storage cylinder liner with high strength, high toughness and high fatigue life, which has a yield strength of ≥ 305 MPa, a tensile strength of ≥ 336 MPa, and an elongation of ≥ 12.5%; and under the test standard GB/T 35544, the hydrogen storage cylinder liner has a bursting strength of ≥ 144 MPa and a fatigue life of ≥ 14,218 cycles; the manufacturing method of the aluminum alloy plate adopts hot rolling deformation, and the process has short time consumption, low cost, and is suitable for industrial application.

To achieve the above objectives, the technical solution of the present invention is as follows:
In a first aspect, the present invention provides an aluminum alloy plate for high-pressure hydrogen storage cylinder liner with high strength and high toughness, in addition to Al and inevitable impurities, the aluminum alloy plate further comprises the following chemical elements in percentage by weight: Mg: 0.93-1.14%, Si: 0.56-0.70%, Fe: 0.45-0.51%, Cu: 0.29-0.33%, Mn: 0.01-0.03%, Cr: 0.17-0.23%, Zn: 0.01-0.07%, Ti: 0.028-0.033%, Pb: 0.001-0.003%, Bi: 0.0002-0.0006%; wherein a total amount of the inevitable impurities is ≤0.15%, and wherein the elements further satisfy: Mg/Si = 1.6-1.68.

In a preferred embodiment of the present invention, preferably, the aluminum alloy plate comprises the following elements in percentage by weight: Mg: 0.93-1.14%, Si: 0.56-0.70%, Fe: 0.45-0.51%, Cu: 0.29-0.33%, Mn: 0.01-0.03%, Cr: 0.17-0.23%, Zn: 0.01-0.07%, Ti: 0.028-0.033%, Pb: 0.001-0.003%, Bi: 0.0002-0.0006%, with a balance of Al and inevitable impurities.

Preferably, the aluminum alloy plate according to the present invention has a grain structure of fine equiaxed grain, and an average grain size of (148~259) ± (17~68) µm.

It should be noted that the numerical range after the "±" sign refers to the difference between the maximum grain and the minimum grain in the plate. The smaller this numerical range, the smaller the difference between grain sizes, and the more uniform the grain size distribution.

The aluminum alloy plate according to the present invention has a yield strength of ≤ 54 MPa, a tensile strength of ≤ 120 MPa, and an elongation of ≥ 29%.

In the composition design of the present invention,
Mg can form the strengthening phase Mg₂Si with Si, thereby increasing the strength of the alloy, but an excessively high content will reduce the toughness of the material. Therefore, the present invention controls the content of Mg element to 0.93-1.14%.

Si can increase strength, but an excessively high content will cause material corrosion. Therefore, the present invention controls the Si content to 0.56-0.70%.

Cu can improve the strength and hardness of the material, but an excessively high content will also cause material corrosion. Therefore, the present invention controls the Cu content to 0.29-0.33%.

Fe can generate inclusive substance when pressure increases, reducing the dissolution of the material in Al. Therefore, the present invention controls the Fe content to 0.45-0.51%.

Mn can dissolve in the aluminum alloy through solid solution to hinder the occurrence of recrystallization. An excessively high content will lead to severe intragranular segregation in the α phase, affecting the recrystallization process of the alloy and causing grain coarsening of the alloy in the annealed state. The present invention controls the Mn content within 0.01-0.03% to avoid grain coarsening caused by intragranular segregation.

Cr can increase material strength, control grain size, and provide toughness. Therefore, the present invention controls the Cr content to Cr: 0.17-0.23%.

Zn can affect grain size and corrosion resistance. Therefore, the present invention controls the Zn content to 0.01-0.07%.

Ti can refine the grain structure, but an excessively high content will affect the ductility of the material. Therefore, the present invention controls the Ti content to 0.028-0.033%.

Pb and Bi are harmful elements in gas cylinders and need to be strictly controlled. The present invention strictly controls the Pb content to 0.001-0.003%, and strictly controls the Bi content to 0.0002-0.0006%.

In terms of composition design, through alloy composition design and further controlling Mg/Si = 1.6-1.68, the present invention controls the precipitation of strengthening phases such as Mg₂Si and Al₂Cu in the microstructure of the final gas cylinder manufactured from the aluminum alloy plate, wherein the Mg₂Si phase accounts for 1.2-1.4 mol% of the total amount of phases in the microstructure, with a size of 0.8-1.5 µm, and the Al₂Cu phase accounts for 0.2-0.3 mol% of the total amount of phases in the microstructure, with a size of 50-80 nm, thereby enhancing the strength, toughness, and fatigue life of the gas cylinder liner, which has a yield strength of ≥ 305 MPa, a tensile strength of ≥ 336 MPa, and an elongation of ≥ 12.5%; and a bursting strength of ≥ 144 MPa and a fatigue life of the gas cylinder of ≥ 14,218 cycles measured according to test standard GB/T35544, far exceeding the requirements specified in GB/T 35544 for a hydrogen storage cylinder liner, which has a bursting strength of 78.75 MPa and a fatigue life of 11,000 cycles.

In a second aspect, the present invention provides a method for manufacturing the above aluminum alloy plate for high-pressure hydrogen storage cylinder liner with high strength and high toughness, comprising the following steps:
1) smelting and casting
   smelting and casting in accordance with the above composition to obtain an ingot;
2) heating the ingot
   wherein a heating temperature is 420-500°C, and a heating time is 3-24 h;
3) hot rolling
   reversible hot rough rolling to obtain a 12-30 mm hot-rolled plate, wherein a maximum reduction per pass is controlled at 35% or more during hot rough rolling, and a finishing rolling temperature of the hot rolling is controlled at 240-280°C;
4) annealing
   wherein an annealing temperature is 390-450°C, and an annealing time is 1-3 h, after annealing, cooling to 200-260°C at a cooling rate of 16-28°C/h, then discharging from the furnace and air cooling to room temperature to obtain an aluminum alloy plate.

More specifically, "air cooling" means naturally cooling in air, generally with a cooling rate of 30-50°C/h.

Preferably, in step 4), the hot-rolled plate has a thickness of 15-25 mm.

Preferably, in step 4), the annealing temperature is 410-430°C.

Preferably, in step 4), after annealing, cooling is carried out to 200-220°C at a cooling rate of 18-22°C/h.

In the present invention, by optimizing the reduction amount per pass during hot rolling and ensuring that a maximum reduction amount per pass is ≥ 35%, the fibrous structure in the aluminum alloy plate is sufficiently crushed, thereby providing sufficient recrystallization nucleation cores for the annealing process.

In the present invention, the finishing rolling temperature of hot rolling is controlled to 240-280°C. By optimizing the finishing rolling temperature during hot rolling, the release of stored energy during hot rolling is reduced, providing sufficient driving force for recrystallization in the subsequent annealing process, refining the microstructure of the aluminum alloy, and forming the grain structure of the aluminum alloy plate as fine equiaxed grains with an average grain size of (148~259) ± (17~68) µm.

After annealing, cooling is carried out to 200-260°C at a cooling rate of 16-28°C/h. The aluminum alloy plate of the present invention contains elements such as Mg, Si, and Cu. Due to the quenching effect, if the cooling rate of the plate after annealing is too fast, strengthening phases such as Mg₂Si and Al₂Cu will be generated prematurely during the annealing process, which is detrimental to the plate's deep drawing forming in the subsequent gas cylinder manufacturing process, and will reduce the generation of the alloy quenching effect during the heat treatment after deep drawing forming. Therefore, the present invention controls the cooling rate after annealing to 16-28°C/h.

In a third aspect, the present invention provides a high-pressure hydrogen storage cylinder liner with high strength and high toughness manufactured from the above aluminum alloy plate, wherein the hydrogen storage cylinder liner has a microstructure comprising Mg₂Si phase and Al₂Cu phase; wherein the Mg₂Si phase accounts for 1.2-1.4 mol% of the total amount of phases in the microstructure, with a size of 0.8-1.5 µm, and the Al₂Cu phase accounts for 0.2-0.3 mol% of the total amount of phases in the microstructure, with a size of 50-80 nm.

Preferably, the hydrogen storage cylinder liner has a yield strength of ≥ 305 MPa, a tensile strength of ≥ 336 MPa, and an elongation of ≥ 12.5%; and a bursting strength of ≥ 144 MPa and a fatigue life of ≥ 14,218 cycles measured according to test standard GB/T35544.

In a fourth aspect, the present invention provides a method for manufacturing the above high-pressure hydrogen storage cylinder liner with high strength and high toughness, comprising the following steps:
1) cylinder forming
   blanking an aluminum alloy plate into a circular blank → applying oil to the circular blank → cold deep drawing → outer surface grinding → trimming ears → necking by spinning → forming threads to obtain a preformed cylinder liner;
2) T6 heat treatment
   heating the obtained preformed cylinder liner to 530-545°C within 40-80 min for solid solution treatment, with a solid solution treatment time of 40-80 min; after the solid solution treatment, water cooling to room temperature and allowing to stand for 10-30 min; then heating to 170-190°C within 30-60 min for aging treatment, with an aging time of 6-10 h;
3) carbon fiber winding
   winding carbon fiber on an outer surface of the heat-treated cylinder liner to obtain a finished cylinder liner.

In manufacturing the hydrogen storage cylinder liner using the aluminum alloy plate obtained above, since the aluminum alloy composition optimizes the composition ranges of Mg, Si, and Cu elements, and further controls Mg/Si = 1.6-1.68, the precipitation of strengthening phases such as Mg₂Si and Al₂Cu is controlled during the subsequent T6 heat treatment, and in the microstructure of the final gas cylinder, the Mg₂Si phase is controlled to have a molar content of 1.2-1.4 mol% and a size of 0.8-1.5 µm, and the Al₂Cu phase is controlled to have a molar content of 0.2-0.3 mol% and a size of 50-80 nm, thereby enabling the obtained liner to have high strength and thus improving the bursting performance of the gas cylinder. The liner has a yield strength of ≥ 305 MPa, a tensile strength of ≥ 336 MPa, and an elongation of ≥ 12.5%; and a bursting strength of ≥ 144 MPa and a fatigue life of ≥ 14,218 cycles measured according to test standard GB/T35544.

Compared with the prior art, the beneficial effects of the present invention are as follows:
In terms of composition design, through alloy composition design and further controlling Mg/Si = 1.6-1.68, the present invention controls the precipitation of strengthening phases such as Mg₂Si and Al₂Cu in the aluminum alloy plate during the subsequent T6 heat treatment, such that in the microstructure of the final gas cylinder, the Mg₂Si phase accounts for 1.2-1.4 mol% of the total amount of phases, with a size of 0.8-1.5 µm, and the Al₂Cu phase accounts for 0.2-0.3 mol% of the total amount of phases, with a size of 50-80 nm, thereby enhancing the strength, toughness, and fatigue life of the gas cylinder liner, which has a yield strength of ≥ 305 MPa, a tensile strength of ≥ 336 MPa, and an elongation of ≥ 12.5%; and a bursting strength of ≥ 144 MPa and a fatigue life of ≥ 14,218 cycles measured according to test standard GB/T35544, far exceeding the requirements specified in GB/T 35544 for a hydrogen storage cylinder liner, which has a bursting strength of 78.75 MPa and a fatigue life of 11,000 cycles.

On the basis of the composition design, the present invention optimizes the reduction amount per pass during hot rolling and ensures a maximum reduction amount per pass of ≥ 35%, so that the fibrous structure in the aluminum alloy plate is sufficiently crushed, providing sufficient recrystallization nucleation cores for the annealing process; further optimizing the finishing rolling temperature range during hot rolling to 240-280°C, reducing the release of stored energy during hot rolling and providing sufficient driving force for recrystallization in the annealing process; and controlling the cooling rate and the discharge temperature during the annealing process to reduce the generation of the alloy quenching effect and improve the grain structure of the alloy, which on one hand can improve the formability of the aluminum alloy plate, and on the other hand contributes to the enhancement of the strength and toughness of the subsequent gas cylinder liner and the improvement of the fatigue life of the gas cylinder liner. Moreover, the control of the cooling rate during the annealing process prevents the premature precipitation of strengthening phases such as Mg₂Si and Al₂Cu during annealing, so that they precipitate after the subsequent T6 heat treatment, thereby improving the formability of the aluminum alloy plate while ensuring the enhancement of the strength and toughness of the final gas cylinder.

The present invention adopts a rolling hot deformation method for the manufacturing of the aluminum alloy plate. Compared with the traditional cold rolling process, long-time heat treatment is avoided and the thickness specification of the aluminum alloy plate for gas cylinder liner is expanded. The thickness of the aluminum alloy plate of the present invention can be 12-30 mm, while the thickness specification of the traditional aluminum alloy plate is around 4 mm, suitable for the production of larger-sized gas cylinders and is conducive to industrial popularization and application. Compared with the traditional manufacturing method of power spinning and backward extrusion of the aluminum tube, specialized equipment and dies are not required, so that a large-scale low-cost production can be achieved, which is more conducive to industrial popularization and application.

### BRIEF DESCRIPTION OF THE DRAWINGS

Figure 1 is a photograph of the metallographic structure of the aluminum alloy plate of Example 1 of the present invention.
Figure 2 is a photograph of the metallographic structure of the aluminum alloy plate of Example 2 of the present invention.
Figure 3 is a photograph of the metallographic structure of the aluminum alloy plate of Example 3 of the present invention.
Figure 4 is a photograph of the metallographic structure of the aluminum alloy plate of Example 4 of the present invention.
Figure 5 is a photograph of the metallographic structure of the aluminum alloy plate of Example 5 of the present invention.
Figure 6 is a photograph of the metallographic structure of the aluminum alloy plate of Example 6 of the present invention.
Figure 7 is a photograph of the metallographic structure of the aluminum alloy plate of Comparative Example 1 of the present invention.
Figure 8 is a photograph of the metallographic structure of the aluminum alloy plate of Comparative Example 2 of the present invention.
Figure 9 is a photograph of the metallographic structure of the aluminum alloy plate of Comparative Example 3 of the present invention.
Figure 10 is a photograph of the metallographic structure of the aluminum alloy plate of Comparative Example 4 of the present invention.
Figure 11 is a photograph of the metallographic structure of the aluminum alloy plate of Comparative Example 5 of the present invention.
Figure 12 is a photograph of the metallographic structure of the aluminum alloy plate of Comparative Example 6 of the present invention.

### DETAILED DESCRIPTION

The present invention will be further described below in combination with the examples and the drawings.

The compositions of the aluminum alloy plates of the Examples and the Comparative Examples of the present invention are shown in Table 1, with the balance of the composition comprising Al and other inevitable impurities.

The process parameters of the Examples and the Comparative Examples of the present invention are shown in Table 2.

The mechanical properties and grain sizes of the aluminum alloy plates of the Examples and the Comparative Examples of the present invention are shown in Table 3.

The aluminum alloy plate obtained in the present invention was used to obtain the corresponding hydrogen storage cylinder liner according to the following steps:
1) cylinder forming
   blanking an aluminum alloy plate into a circular blank → applying oil to the circular blank → cold deep drawing →outer surface grinding → trimming ears → necking by spinning → forming threads to obtain a preformed cylinder liner;
2) T6 heat treatment
   heating the obtained preformed cylinder liner to 530-545°C within 40-80 min for solid solution treatment, with a solid solution treatment time of 40-80 min; after the solid solution treatment, water cooling to room temperature and allowing to stand for 10-30 min; then heating to 170-190°C within 30-60 min for aging treatment, with an aging time of 6-10 h;
3) carbon fiber winding
   winding carbon fiber on an outer surface of the heat-treated cylinder liner to obtain a finished cylinder liner.

The contents and sizes of Mg₂Si and Al₂Cu contained in the microstructure of the gas cylinder liners manufactured from the aluminum alloy plates of the Examples and the Comparative Examples of the present invention are shown in Table 4.

The mechanical properties, bursting strength and fatigue life of the gas cylinder liners manufactured from the aluminum alloy plates of the Examples and the Comparative Examples of the present invention are shown in Table 5, measured according to GB/T 35544 as the testing standard.

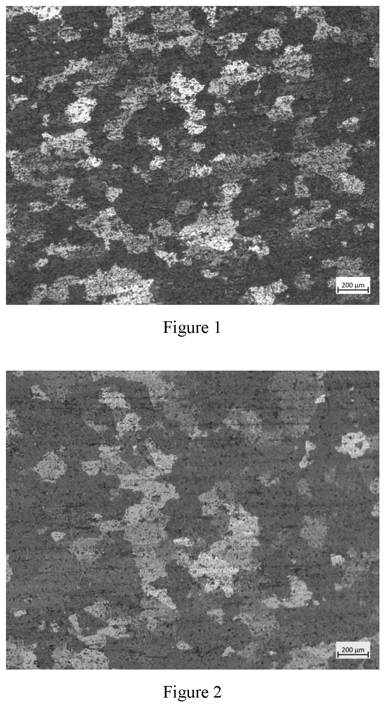

In Example 1, samples were taken and tested for the grain structure and mechanical properties of the annealed aluminum alloy plate, and the mechanical properties are shown in Table 3. Figure 1 is a photograph of the metallographic structure of the rolled surface of the aluminum alloy sample of Example 1 of the present invention. It can be seen from the photograph that the grain structure consists of equiaxed grains, with an average grain size of 148±17 µm. There is only a slight size difference among the grains. Samples were taken and tested for the mechanical properties of the liner at room temperature. The yield strength is 310 MPa, the tensile strength is 343 MPa, and the elongation is 12.5%. The bursting strength of the obtained hydrogen storage cylinder liner can reach 150 MPa, meeting the bursting performance requirement of ≥ 78.75 MPa in GB/T 35544, and its fatigue life can reach 17,131 cycles, meeting the fatigue performance requirement of ≥ 11,000 cycles in GB/T 35544.

In Example 2, samples were taken and tested for the grain structure and mechanical properties of the annealed aluminum alloy plate, and the mechanical properties are shown in Table 3. Figure 2 is a photograph of the metallographic structure of the rolled surface of the aluminum alloy sample of Example 2 of the present invention. It can be seen from the photograph that the grain structure consists of equiaxed grains, with an average grain size of 237±46 µm. The gas cylinder liner manufactured therefrom was tested for mechanical properties at room temperature, exhibiting a yield strength of 308 MPa, a tensile strength of 341 MPa, and an elongation of 13.2%. The bursting strength of the obtained hydrogen storage cylinder liner can reach 146 MPa, meeting the bursting performance requirement of ≥ 78.75 MPa in GB/T 35544, and its fatigue life can reach 14,314 cycles, meeting the fatigue performance requirement of ≥ 11,000 cycles in GB/T 35544.

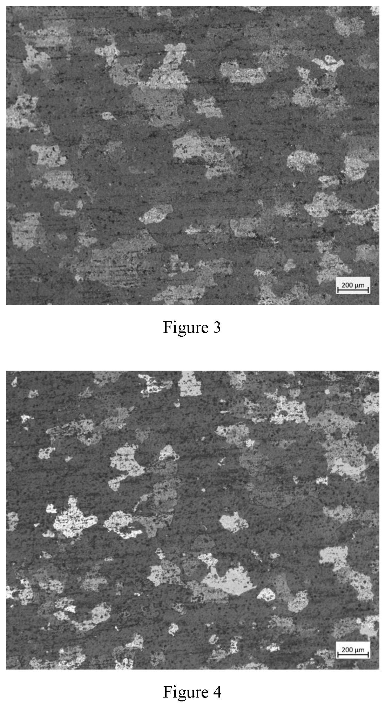

In Example 3, samples were taken and tested for the grain structure and mechanical properties of the annealed aluminum alloy plate, and the mechanical properties are shown in Table 3. Figure 3 is a photograph of the metallographic structure of the rolled surface of the aluminum alloy sample of Example 3 of the present invention. It can be seen from the photograph that the grain structure consists of equiaxed grains, with an average grain size of 232±68 µm. The gas cylinder liner manufactured therefrom was tested for mechanical properties at room temperature, exhibiting a yield strength of 305 MPa, a tensile strength of 338 MPa, and an elongation of 12.8%. The bursting strength of the obtained hydrogen storage cylinder liner can reach 144 MPa, meeting the bursting performance requirement of ≥ 78.75 MPa in GB/T 35544, and its fatigue life can reach 14,532 cycles, meeting the fatigue performance requirement of ≥ 11,000 cycles in GB/T 35544.

In Example 4, samples were taken and tested for the grain structure and mechanical properties of the annealed aluminum alloy plate, and the mechanical properties are shown in Table 3. Figure 4 is a photograph of the metallographic structure of the rolled surface of the aluminum alloy sample of Example 4 of the present invention. It can be seen from the photograph that the grain structure consists of equiaxed grains, with an average grain size of 203±43 µm. The gas cylinder liner manufactured therefrom was tested for mechanical properties at room temperature, exhibiting a yield strength of 306 MPa, a tensile strength of 336 MPa, and an elongation of 12.7%. The bursting strength of the obtained hydrogen storage cylinder liner can reach 145 MPa, meeting the bursting performance requirement of ≥ 78.75 MPa in GB/T 35544, and its fatigue life can reach 15,135 cycles, meeting the fatigue performance requirement of ≥ 11,000 cycles in GB/T 35544.

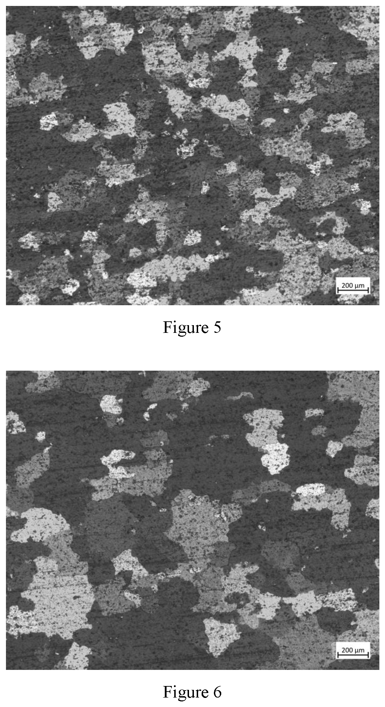

In Example 5, samples were taken and tested for the grain structure and mechanical properties of the annealed aluminum alloy plate, and the mechanical properties are shown in Table 3. Figure 5 is a photograph of the metallographic structure of the rolled surface of the aluminum alloy sample of Example 5 of the present invention. It can be seen from the photograph that the grain structure consists of equiaxed grains, with an average grain size of 204±38 µm. The gas cylinder liner manufactured therefrom was tested for mechanical properties at room temperature, exhibiting a yield strength of 309 MPa, a tensile strength of 339 MPa, and an elongation of 12.6%. The bursting strength of the obtained hydrogen storage cylinder liner can reach 148 MPa, meeting the bursting performance requirement of ≥ 78.75 MPa in GB/T 35544, and its fatigue life can reach 15,157 cycles, meeting the fatigue performance requirement of ≥ 11,000 cycles in GB/T 35544.

In Example 6, samples were taken and tested for the grain structure and mechanical properties of the annealed aluminum alloy plate, and the mechanical properties are shown in Table 3. Figure 6 is a photograph of the metallographic structure of the rolled surface of the aluminum alloy sample of Example 6 of the present invention. It can be seen from the photograph that the grain structure consists of equiaxed grains, with an average grain size of 259±66 µm. The gas cylinder liner manufactured therefrom was tested for mechanical properties at room temperature, exhibiting a yield strength of 308 MPa, a tensile strength of 340 MPa, and an elongation of 12.5%. The bursting strength of the obtained hydrogen storage cylinder liner can reach 147 MPa, meeting the bursting performance requirement of ≥ 78.75 MPa in GB/T 35544, and its fatigue life can reach 14,218 cycles, meeting the fatigue performance requirement of ≥ 11,000 cycles in GB/T 35544.

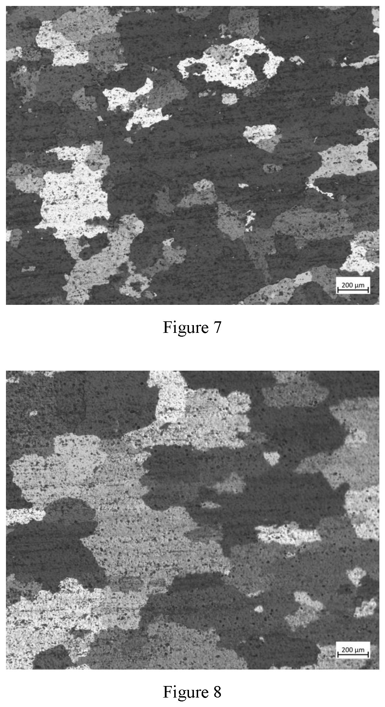

In Comparative Example 1, samples were taken and tested for the grain structure and mechanical properties of the annealed aluminum alloy plate, and the mechanical properties are shown in Table 3. Figure 7 is a photograph of the metallographic structure of the rolled surface of the aluminum alloy sample of Comparative Example 1 of the present invention. It can be seen from the photograph that the average grain size is 361±141 µm. The grain size is coarse, and there is a large size difference among the grains. The gas cylinder liner manufactured therefrom was tested for mechanical properties at room temperature, exhibiting a yield strength of 270 MPa, a tensile strength of 316 MPa, and an elongation of 15.4%. In the microstructure of the obtained hydrogen storage cylinder liner, the amount and particle size of the Mg₂Si and Al₂Cu strengthening phases do not meet the requirements of the present invention, resulting in a bursting strength of only 120 MPa, and a fatigue life of only 12,619 cycles.

In Comparative Example 2, samples were taken and tested for the grain structure and mechanical properties of the annealed aluminum alloy plate, and the mechanical properties are shown in Table 3. Figure 8 is a photograph of the metallographic structure of the rolled surface of the aluminum alloy sample of Comparative Example 2 of the present invention. It can be seen from the photograph that the average grain size is 445±159 µm. The grain size is coarse, and there is a large size difference among the grains. The gas cylinder liner manufactured therefrom was tested for mechanical properties at room temperature, exhibiting a yield strength of 308 MPa, a tensile strength of 339 MPa, and an elongation of 12.9%. The bursting strength of the obtained hydrogen storage cylinder liner is 143 MPa. Although a same level as the present invention can be reached, the fatigue life of the hydrogen storage cylinder liner is relatively low, only 11,318 cycles.

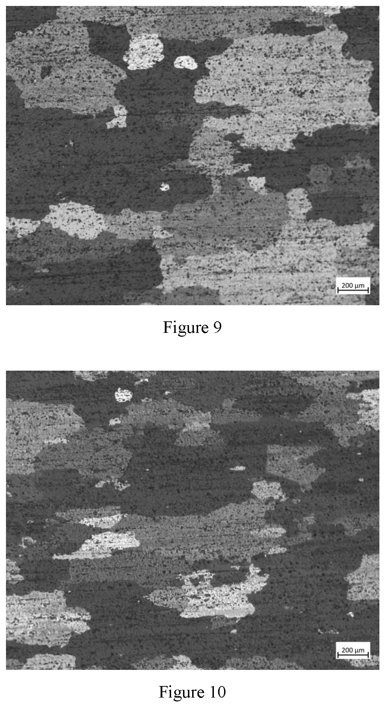

In Comparative Example 3, samples were taken and tested for the grain structure and mechanical properties of the annealed aluminum alloy plate, and the mechanical properties are shown in Table 3. Figure 9 is a photograph of the metallographic structure of the rolled surface of the aluminum alloy sample of Comparative Example 3 of the present invention. It can be seen from the photograph that the average grain size is 549±245 µm. The grain size is coarse, and there is a large size difference among the grains. The gas cylinder liner manufactured therefrom was tested for mechanical properties at room temperature, exhibiting a yield strength of 307 MPa, a tensile strength of 336 MPa, and an elongation of 13.1%. The bursting strength of the obtained hydrogen storage cylinder liner is 144 MPa. The fatigue life of the obtained hydrogen storage cylinder liner is only 9,532 cycles, which does not meet the fatigue performance requirement of ≥ 11,000 cycles in GB/T 35544.

In Comparative Example 4, samples were taken and tested for the grain structure and mechanical properties of the annealed aluminum alloy plate, and the mechanical properties are shown in Table 3. Figure 10 is a photograph of the metallographic structure of the rolled surface of the aluminum alloy sample of Comparative Example 4 of the present invention. It can be seen from the photograph that the average grain size is 479±244 µm. The grain size is coarse, and there is a large size difference among the grains. The gas cylinder liner manufactured therefrom was tested for mechanical properties at room temperature, exhibiting a yield strength of 272 MPa, a tensile strength of 315 MPa, and an elongation of 13.5%. The obtained hydrogen storage cylinder liner has a relatively low bursting strength of 123 MPa, and its fatigue life is only 9,613 cycles, which does not meet the fatigue performance requirement of ≥ 11,000 cycles in GB/T 35544.

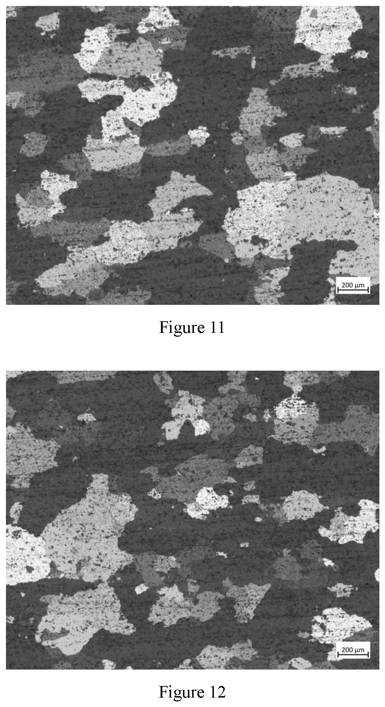

In Comparative Example 5, samples were taken and tested for the grain structure and mechanical properties of the annealed aluminum alloy plate, and the mechanical properties are shown in Table 3. Figure 11 is a photograph of the metallographic structure of the rolled surface of the aluminum alloy sample of Comparative Example 5 of the present invention. It can be seen from the photograph that the average grain size is 427±124 µm. The grain size is coarse, and there is a large size difference among the grains. The gas cylinder liner manufactured therefrom was tested for mechanical properties at room temperature, exhibiting a yield strength of 309 MPa, a tensile strength of 338 MPa, and an elongation of 12.4%. The obtained hydrogen storage cylinder liner has a bursting strength of 143 MPa, but its fatigue life is relatively low, only 11,639 cycles.

In Comparative Example 6, samples were taken and tested for the grain structure and mechanical properties of the annealed aluminum alloy plate, and the mechanical properties are shown in Table 3. Figure 12 is a photograph of the metallographic structure of the rolled surface of the aluminum alloy sample of Comparative Example 6 of the present invention. It can be seen from the photograph that the average grain size is 435±151 µm. The grain size is coarse, and there is a large size difference among the grains. The gas cylinder liner manufactured therefrom was tested for mechanical properties at room temperature, exhibiting a yield strength of 273 MPa, a tensile strength of 317 MPa, and an elongation of 12.7%. The obtained hydrogen storage cylinder liner has a low bursting strength of 125 MPa, and its fatigue life is relatively low, only 11,103 cycles.

**Table 1 Unit: percentage by weight**

| | Si | Fe | Cu | Mn | Mg | Cr | Zn | Ti | Pb | Bi | Mg/Si | Impurities | Al |
|---|---|---|---|---|---|---|---|---|---|---|---|---|---|
| Example 1 | 0.68 | 0.51 | 0.300 | 0.01 | 1.14 | 0.17 | 0.01 | 0.028 | 0.002 | 0.0005 | 1.68 | ≤0.15 | Balance |
| Example 2 | 0.70 | 0.45 | 0.320 | 0.02 | 1.12 | 0.18 | 0.03 | 0.032 | 0.003 | 0.0003 | 1.60 | ≤0.15 | Balance |
| Example 3 | 0.62 | 0.47 | 0.330 | 0.03 | 1.03 | 0.20 | 0.04 | 0.031 | 0.001 | 0.0006 | 1.66 | ≤0.15 | Balance |
| Example 4 | 0.64 | 0.48 | 0.295 | 0.01 | 1.05 | 0.21 | 0.02 | 0.029 | 0.001 | 0.0003 | 1.64 | ≤0.15 | Balance |
| Example 5 | 0.56 | 0.50 | 0.310 | 0.03 | 0.93 | 0.19 | 0.07 | 0.033 | 0.002 | 0.0002 | 1.66 | ≤0.15 | Balance |
| Example 6 | 0.66 | 0.49 | 0.290 | 0.02 | 1.08 | 0.23 | 0.05 | 0.030 | 0.003 | 0.0004 | 1.64 | ≤0.15 | Balance |
| Comparative Example 1 | 0.52 | 0.42 | 0.23 | 0.07 | 1.00 | 0.15 | 0.02 | 0.041 | 0.002 | 0.0005 | 1.92 | ≤0.15 | Balance |
| Comparative Example 2 | 0.63 | 0.48 | 0.31 | 0.03 | 1.05 | 0.18 | 0.03 | 0.032 | 0.003 | 0.0006 | 1.67 | ≤0.15 | Balance |
| Comparative Example 3 | 0.62 | 0.52 | 0.32 | 0.02 | 1.03 | 0.21 | 0.01 | 0.035 | 0.002 | 0.0004 | 1.66 | ≤0.15 | Balance |
| Comparative Example 4 | 0.52 | 0.53 | 0.28 | 0.03 | 1.05 | 0.17 | 0.02 | 0.033 | 0.001 | 0.0007 | 2.02 | ≤0.15 | Balance |
| Comparative Example 5 | 0.61 | 0.57 | 0.30 | 0.03 | 1.01 | 0.17 | 0.05 | 0.032 | 0.003 | 0.0003 | 1.66 | ≤0.15 | Balance |
| Comparative Example 6 | 0.53 | 0.48 | 0.29 | 0.02 | 1.07 | 0.19 | 0.06 | 0.031 | 0.001 | 0.0005 | 2.02 | ≤0.15 | Balance |

**Table 2**

| | Heating temperature °C | Heating time h | Maximum reduction amount per pass % | Finishing rolling temperature °C | Annealing temperature °C | Annealing time h | Cooling rate °C/h | Air-cooling discharge temperature °C |
|---|---|---|---|---|---|---|---|---|
| Example 1 | 470 | 3 | 38.3 | 261 | 430 | 3 | 20 | 200 |
| Example 2 | 420 | 6 | 35.0 | 240 | 410 | 2.4 | 16 | 210 |
| Example 3 | 460 | 12 | 36.7 | 273 | 400 | 1 | 18 | 220 |
| Example 4 | 430 | 18 | 38.6 | 274 | 390 | 2.2 | 16 | 240 |
| Example 5 | 450 | 15 | 37.3 | 247 | 450 | 1.3 | 26 | 260 |
| Example 6 | 480 | 24 | 40.0 | 280 | 440 | 2 | 28 | 250 |
| Comparative Example 1 | 420 | 3 | 38.5 | 264 | 430 | 3 | 20 | 200 |
| Comparative Example 2 | 420 | 3 | 23.2 | 262 | 430 | 3 | 20 | 200 |
| Comparative Example 3 | 420 | 3 | 38.1 | 331 | 430 | 3 | 20 | 200 |
| Comparative Example 4 | 420 | 3 | 37.8 | 315 | 430 | 3 | 20 | 200 |
| Comparative Example 5 | 420 | 3 | 36.9 | 271 | 430 | 3 | Air cooling | 430 |
| Comparative Example 6 | 420 | 3 | 37.1 | 258 | 430 | 3 | 40 | 260 |

**Table 3**

| | Thickness mm | Yield strength MPa | Tensile strength MPa | Elongation % | Grain size µm |
|---|---|---|---|---|---|
| Example 1 | 20.2 | 53 | 119 | 34.1 | 148±17 |
| Example 2 | 16.7 | 54 | 119 | 33 | 237±46 |
| Example 3 | 12 | 53 | 120 | 33.3 | 232±68 |
| Example 4 | 25.2 | 54 | 120 | 32.5 | 203±43 |
| Example 5 | 30 | 53 | 119 | 31.6 | 204±38 |
| Example 6 | 15.2 | 53 | 119 | 29.3 | 259±66 |
| Comparative Example 1 | 20.2 | 55 | 123 | 29.3 | 361±141 |
| Comparative Example 2 | 20.1 | 55 | 123 | 28.9 | 445±159 |
| Comparative Example 3 | 20.3 | 56 | 123 | 32.2 | 549±245 |
| Comparative Example 4 | 20.1 | 57 | 124 | 29.2 | 479±244 |
| Comparative Example 5 | 20.2 | 76 | 129 | 28.2 | 427±124 |
| Comparative Example 6 | 20.3 | 68 | 119 | 29.5 | 435±151 |

**Table 4**

| | Mg₂Si molar content % | Mg₂Si average size µm | Al₂Cu molar content % | Al₂Cu average size nm |
|---|---|---|---|---|
| Example 1 | 1.25 | 0.80 | 0.20 | 50 |
| Example 2 | 1.31 | 0.93 | 0.24 | 63 |
| Example 3 | 1.27 | 1.23 | 0.27 | 69 |
| Example 4 | 1.36 | 1.50 | 0.22 | 72 |
| Example 5 | 1.40 | 1.12 | 0.30 | 80 |
| Example 6 | 1.20 | 1.36 | 0.28 | 77 |
| Comparative Example 1 | 1.48 | 3.2 | 0.4 | 93 |
| Comparative Example 2 | 1.4 | 1.32 | 0.23 | 68 |
| Comparative Example 3 | 1.41 | 1.48 | 0.25 | 57 |
| Comparative Example 4 | 1.46 | 3.5 | 0.42 | 102 |
| Comparative Example 5 | 1.38 | 1.26 | 0.27 | 74 |
| Comparative Example 6 | 1.47 | 3.8 | 0.43 | 106 |

**Table 5**

| | Yield strength MPa | Tensile strength MPa | Elongation % | Bursting strength MPa | Fatigue life |
|---|---|---|---|---|---|
| Example 1 | 310 | 343 | 12.5 | 150 | 17131 |
| Example 2 | 308 | 341 | 13.2 | 146 | 14314 |
| Example 3 | 305 | 338 | 12.8 | 144 | 14532 |
| Example 4 | 306 | 336 | 12.7 | 145 | 15135 |
| Example 5 | 309 | 339 | 12.6 | 148 | 15157 |
| Example 6 | 308 | 340 | 12.5 | 147 | 14218 |
| Comparative Example 1 | 270 | 316 | 15.4 | 120 | 12619 |
| Comparative Example 2 | 308 | 339 | 12.9 | 143 | 11318 |
| Comparative Example 3 | 307 | 336 | 13.1 | 144 | 9532 |
| Comparative Example 4 | 272 | 315 | 13.5 | 123 | 9613 |
| Comparative Example 5 | 309 | 338 | 12.4 | 143 | 11639 |
| Comparative Example 6 | 273 | 317 | 12.7 | 125 | 11103 |

## Claims

1. An aluminum alloy plate for hydrogen storage cylinder liner, **characterized in that**, in addition to Al and inevitable impurities, the aluminum alloy plate further comprises the following chemical elements in percentage by weight: Mg: 0.93-1.14%, Si: 0.56-0.70%, Fe: 0.45-0.51%, Cu: 0.29-0.33%, Mn: 0.01-0.03%, Cr: 0.17-0.23%, Zn: 0.01-0.07%, Ti: 0.028-0.033%, Pb: 0.001-0.003%, Bi: 0.0002-0.0006%; wherein a total amount of the inevitable impurities is ≤0.15%, and wherein the elements further satisfy: Mg/Si = 1.6-1.68.

2. The aluminum alloy plate for hydrogen storage cylinder liner according to claim 1, **characterized in that**, the aluminum alloy plate comprises the following elements in percentage by weight: Mg: 0.93-1.14%, Si: 0.56-0.70%, Fe: 0.45-0.51%, Cu: 0.29-0.33%, Mn: 0.01-0.03%, Cr: 0.17-0.23%, Zn: 0.01-0.07%, Ti: 0.028-0.033%, Pb: 0.001-0.003%, Bi: 0.0002-0.0006%, with a balance of Al and inevitable impurities.

3. The aluminum alloy plate for hydrogen storage cylinder liner according to claim 1 or 2, **characterized in that**, the aluminum alloy plate has a grain structure of equiaxed grain, and an average grain size of (148~259) ± (17~68) µm.

4. The aluminum alloy plate for hydrogen storage cylinder liner according to claim 1 or 2, **characterized in that**, the aluminum alloy plate has a thickness of 12-30 mm.

5. The aluminum alloy plate for hydrogen storage cylinder liner according to claim 1 or 2, **characterized in that**, the aluminum alloy plate has a yield strength of ≤ 54 MPa, a tensile strength of ≤ 120 MPa, and an elongation of ≥ 29%.

6. A method for manufacturing the aluminum alloy plate for hydrogen storage cylinder liner according to any one of claims 1 to 5, **characterized in that**, the method comprises the following steps:
1) smelting and casting
smelting and casting in accordance with the composition of claim 1 or 2 to obtain an ingot;
2) heating the ingot
wherein a heating temperature is 420-500°C, and a heating time is 2-24 h;
3) hot rolling
reversible hot rough rolling to obtain a 12-30 mm hot-rolled plate, wherein a maximum reduction per pass is controlled to 35% or more during hot rough rolling, and a finishing rolling temperature of the hot rolling is controlled at 240-280°C;
4) annealing
wherein an annealing temperature is 390-450°C, and an annealing time is 1-3 h; after annealing, cooling to 200-260°C at a cooling rate of 16-28°C/h, then discharging from the furnace and air cooling to room temperature to obtain an aluminum alloy plate.

7. The manufacturing method according to claim 6, **characterized in that**, in step 3), the hot-rolled plate has a thickness of 15-25 mm.

8. The manufacturing method according to claim 6, **characterized in that**, in step 4), the annealing temperature is 410-430°C.

9. The manufacturing method according to claim 6, **characterized in that**, in step 4), after annealing, cooling is carried out to 200-220°C at a cooling rate of 18-22°C/h.

10. A hydrogen storage cylinder liner manufactured from the aluminum alloy plate according to any one of claims 1 to 5, **characterized in that**, the hydrogen storage cylinder liner has a microstructure comprising Mg₂Si phase and Al₂Cu phase; wherein the Mg₂Si phase accounts for 1.2-1.4 mol% of the total amount of phases in the microstructure, with a size of 0.8-1.5 µm, and the Al₂Cu phase accounts for 0.2-0.3 mol% of the total amount of phases in the microstructure, with a size of 50-80 nm.

11. The hydrogen storage cylinder liner according to claim 10, **characterized in that**, the hydrogen storage cylinder liner has a yield strength of ≥ 305 MPa, a tensile strength of ≥ 336 MPa, and an elongation of ≥ 12.5%; and a bursting strength of ≥ 144 MPa and a fatigue life of ≥ 14,218 cycles measured according to test standard GB/T35544.

12. A method for manufacturing the hydrogen storage cylinder liner according to claim 10 or 11, **characterized in that**, the method comprises the following steps:
1) cylinder forming
blanking an aluminum alloy plate into a circular blank → applying oil to the circular blank → cold deep drawing →outer surface grinding→ trimming ears → necking by spinning → forming threads to obtain a preformed cylinder liner;
2) T6 heat treatment
heating the obtained preformed cylinder liner to 530-545°C within 40-80 min for solid solution treatment with a solid solution treatment time of 40-80 min; after the solid solution treatment, water cooling to room temperature and allowing to stand for 10-30 min; then heating to 170-190°C within 30-60 min for aging treatment, with an aging time of 6-10 h;
3) carbon fiber winding
winding carbon fiber on an outer surface of the heat-treated cylinder liner to obtain a finished cylinder liner.
